# EUROPÄISCHE PATENTSCHRIFT

(11) **EP 4 367 411 B1**
(45) Veröffentlichungstag und Bekanntmachung des Hinweises auf die Patenterteilung: **19.03.2025**
(21) Anmeldenummer: 22741506.4
(22) Anmeldetag: 08.07.2022
(51) Int. Cl.: F16B 25/00, F16B 25/10, F16B 5/06

(54) **DISTANZBEFESTIGER**
SPACING FASTENER
ÉLÉMENT DE FIXATION D'ESPACEMENT

(30) Priorität: 08.07.2021 DE 102021117723
(43) Veröffentlichungstag der Anmeldung: 15.05.2024
(73) Patentinhaber: EJOT SE & Co. KG, 57319 Bad Berleburg (DE)
(72) Erfinder: SIEGEMUND, Uwe, 57319 Bad Berleburg (DE); WAGNER, Daniel, 57334 Bad Laasphe (DE)
(74) Vertreter: Puschmann Borchert Kaiser Klettner Patentanwälte Partnerschaft mbB
(86) Internationale Anmeldenummer: PCT/EP2022/069111
(87) Internationale Veröffentlichungsnummer: WO 2023/281072

(56) Entgegenhaltungen:
- EP-A1- 2 455 562
- DE-A1- 3 420 863
- US-A- 2 321 378
- US-A- 5 487 633
- US-A1- 2016 327 081

## Beschreibung

Die Erfindung betrifft einen Distanzbefestiger zur Befestigung einer Außenschale eines Gebäudes an einer Unterkonstruktion.

Es sind gattungsgemäße Distanzbefestiger zur Befestigung von Außenschalen, beispielsweise aus der EP 3 415 773 A1 , an einer Unterkonstruktion bekannt. Dabei wird die Außenschale zwischen dem Kopf und einem Unterkopfgewinde gehalten. Zwischen dem Kopf und der Außenschale ist ein Dichtelement angeordnet, das regelmäßig als Dichtscheibe zwischen dem Kopf des Distanzbefestigers und der Außenschale angeordnet wird. Im eingebauten Zustand erfolgt dann eine Abdichtung des Durchtrittslochs in der Außenschale, das von dem Distanzbefestiger durchsetzt ist. Die Außenschalen sind regelmäßig dicker als 0,35 mm, insbesondere zwischen 0,4 mm und 1,0 mm. Die Außenschalen können Deckbleche eines Sandwichelements, ein Trapezblech oder ähnliches sein. Der Zwischenraum zwischen Außenschale und Unterkonstruktion kann auch mit einem Dämmmaterial versehen sein.

Die Aufgabe solcher Distanzbefestiger ist es, die Außenschale weitestgehend spannungsfrei in einem vorbestimmten Abstand zur Unterkonstruktion festzulegen.

Da das Dämmmaterial nachgiebig ist, kann dies zur Folge haben, dass es beispielsweise bei hohem Winddruck auf die Außenschale oder durch Setz- bzw. Kriechvorgänge im Dämmmaterial dazu kommen kann, dass die Abdichtung der Außenschale, insbesondere bei einem Distanzbefestiger mit einem eingängigem Unterkopfgewindemit zunehmender Steigung des Unterkopfgewindes leidet.

Zur Verbesserung wurde in der EP 3 415 773 A1 vorgeschlagen, dass das Unterkopfgewinde als ein kurzer mehrgängiger Gewindebereich mit großer Steigung, insbesondere einer Steigung, die größer als die Steigung im Verankerungsabschnitt ist, ausgebildet ist. Durch die Ausläufe der einzelnen Gewindegänge des doppelgängigen Gewindes werden zwei Auflagepunkte geschaffen, die die Verkippneigung der Außenschale gegenüber dem Kopf reduzieren und damit die Abdichtung verbessern. Jedoch führt dies dazu, dass sich aufgrund der größeren Steigung des Unterkopfgewindes eine Spreizung ergibt. Zudem ist die Fertigung aufwendig, da der Unterkopfbereich aufgestaucht werden muss, damit ausreichend Material für das doppelgängige Gewinde zur Verfügung steht.

Es ist Aufgabe der Erfindung einen Distanzbefestiger anzugeben, der gut in einem Press- und Walzprozess herstellbar ist und bei dem die Abdichtung der Durchtrittsstelle in der Außenschale, durch die der Distanzbefestiger eingesetzt ist, verbessert ist.

In bekannter Weise weist ein Distanzbefestiger zur beabstandeten Befestigung einer Außenschale an einer Unterkonstruktion einen Kopf und einen daran anschließenden Schaft auf. Der Schaft endet in einer Spitze, insbesondere einer lochbildenden Spitze, und trägt ein Verankerungsgewinde zur zugfesten Verankerung in der Unterkonstruktion.

Der Schaft weist ein dem Kopf nächstgelegenes Unterkopfgewinde auf, wobei zwischen dem Unterkopfgewinde und dem ersten Verankerungsgewinde ein gewindefreier Schaftabschnitt liegt, wobei das Unterkopfgewinde nahe dem Kopf ausläuft und eine Unterkopfgewindesteigung besitzt.

Das Unterkopfgewinde bildet am Gewindeauslauf einen Auflagepunkt A_{U}.

Gemäß der Erfindung ist zusätzlich zu dem Unterkopfgewinde, in Umfangsrichtung beabstandet zum Gewindeauslauf des Unterkopfgewindes, wenigstens ein Stützelement ausgeformt. Das Stützelement bildet einen Auflagepunkt für eine zwischen dem Kopf und dem Unterkopfgewinde liegende Außenschale.

Das Stützelement ist in Axialrichtung zu dem Unterkopfgewinde beabstandet angeordnet, nämlich zu dem Bereich des Unterkopfgewindes, der in der Draufsicht mit dem Stützelement überlappt.

Ferner ist der Abstand vom Kopf zu dem Auflagepunkt des Stützelements als Stützelementabstand D_{S} definiert. Der Stützelementabstand D_{S} ist erfindungsgemäß größer als der Abstand, der sich aus der Differenz zwischen dem Abstand des Auslaufs des Unterkopfgewindes und einem Toleranzmaß D_{D} ergibt. Das Toleranzmaß D_{D} beträgt höchstens 15%, bevorzugt höchstens 10%, des Außendurchmessers des Unterkopfgewindes.

So liegt der maximale Abstand zwischen dem Gewindeauslauf und dem Auflagepunkt des Stützelements bei gängigen Distanzbefestigern bei etwa 0,5 mm.

Insbesondere entspricht der Abstand des Auslaufs des Unterkopfgewindes zum Kopf dem Stützelementabstand D_{S}. So kann die Außenschale orthogonal zur Schraubenachse abgestützt werden. Durch das erfindungsgemäße Stützelement wird zusätzlich zu dem Auslauf des Unterkopfgewindes ein weiterer Auflagepunkt für die Außenschale bereitgestellt, sodass die Verkippung der Außenschale in engen Grenzen gehalten werden kann.

Auf diese Weise kann die Außenschale bei Einschrauben des Unterkopfgewindes über das Unterkopfgewinde hinweggehoben und dann zwischen dem Kopf bzw. einer Dichtscheibe und dem Unterkopfgewinde geklemmt gehalten werden.

Durch das umfänglich zum Unterkopfgewinde beabstandete Stützelement kann so bei Druck auf die Außenschale die Verkippneigung der Außenschale gegenüber dem Kopf und damit gegenüber dem Dichtelement reduziert werden, sodass der Anpressdruck des Dichtelements gleichmäßig verteilt bleibt. Auf diese Weise bilden das Stützelement und das Ende des Unterkopfgewindes ein Auflageniveau, das nahezu orthogonal zur Schraubenachse ist.

Weiter erfindungsgemäß erstreckt sich das Stützelement, bei Draufsicht, in Umfangsrichtung über einen Erstreckungswinkel, der kleiner als 150° ist.

Der Winkelabstand zwischen dem Gewindeauslauf und dem Beginn des Stützelements beträgt bevorzugt mehr als 50°. Dies ermöglicht es, die Gestaltung des Stützelements, insbesondere im Hinblick auf seine Querschnittsform, weitgehend unabhängig von der Gestaltung des Unterkopfgewindes vorzunehmen.

Durch die umfängliche Beabstandung des Stützelements vom Unterkopfgewinde und der umfänglichen Erstreckung des Stützelements über nur einen geringen Erstreckungswinkel kann das erfindungsgemäße Stützelement einen Auflagepunkt bereitstellen, wobei nur relativ wenig Material verschoben werden muss.

Dadurch kann eine vereinfachte Herstellung erreicht werden, da das Schaftmaterial vor dem Walzen im Bereich des Unterkopfgewindes nur wenig, bevorzugt um weniger als 10% des Rohlingdurchmessers, oder sogar gar nicht, aufgestaucht werden muss und trotzdem der Kerndurchmesser des Unterkopfgewindes dem des Verankerungsabschnitts entsprechen kann. Dadurch wird der Pressvorgang vereinfacht.

Durch das in Umfangsrichtung gemessen kurze Stützelement kann zudem auch bei einer geringen Gewindesteigung des Unterkopfgewindes eine gute Durchführung der Außenschale zwischen dem Stützelement und dem Unterkopfgewinde ermöglicht werden.

Gemäß einer bevorzugten Ausgestaltung entspricht die Steigung des Unterkopfgewindes der Steigung des Verankerungsgewindes.

Die gleiche Steigung führt dazu, dass die Vorschubgeschwindigkeit in der Unterkonstruktion und die Vorschubgeschwindigkeit in der Außenschale im Eingriff mit dem Unterkopfgewinde gleich sind.

Auf diese Weise werden während des Schraubvorgangs die Außenschale und die Unterkonstruktion nicht voneinander wegbewegt, also aufgespreizt, wie dies bei einer größeren Steigung des Unterkopfgewindes der Fall wäre. Dies ist besonders bei der Verarbeitung von Sandwichelementen, bei denen die Außenschale mit einer Dämmung verklebt ist, von Vorteil.

Gemäß einer weiteren vorteilhaften Ausgestaltung der Erfindung kann das Stützelement Flanken wie die eines Gewindes aufweisen. Dies erlaubt eine besonders gute Ausformung des Stützelements während des Gewindewalzprozesses.

Bei einer asymmetrischen Ausgestaltung des Unterkopfgewindes kann die dem Kopf zugewandte Flanke, genannt Lastflanke, einen Flankenwinkel aufweisen, der geringer ist als der Flankenwinkel der der Lastflanke gegenüberliegenden Flanke.

So kann die Lastflanke des Unterkopfgewindes beispielsweise einen Flankenwinkel von 10° gegenüber der Orthogonalen zur Schraubenachse und die der Lastflanke gegenüberliegende Flanke einen Winkel von 35°besitzen. Durch den geringen Flankenwinkel der Lastflanke wird eine gute Auflagefläche der Außenschale erreicht. Die Flanken des Stützelements können analog zu denen des Unterkopfgewindes ausgebildet sein.

Insbesondere bei Distanzbefestigern, die für die Verwendung in einer Metallunterkonstruktion vorgesehen sind, führt die gleiche Steigung von Unterkopfgewinde und Verankerungsgewinde dazu, dass auch das Unterkopfgewinde eine dem Verankerungsgewinde entsprechende, relativ kleine Steigung aufweist.

Besonders im Hinblick auf eine geringe Steigung des Unterkopfgewindes können die Gewindeflanken des Stützelements so gestaltet sein, dass diese in ihrer Querschnittsform unterschiedlich sind.

Insbesondere kann das Stützelement eine Querschnittsform aufweisen, die spiegelverkehrt zur Querschnittsform des Unterkopfgewindes ausgebildet ist.

So kann die Lastflanke des Unterkopfgewindes beispielsweise in einem Flankenwinkel von 10° gegenüber der Orthogonalen zur Schraubenachse angeordnet sein, und die der Lastflanke gegenüberliegend angeordnete Flanke des Stützelements denselben Winkel wie die Lastflanke des Unterkopfgewindes aufweisen, also ebenfalls einen Winkel von 10°. Die jeweils andere Flanke kann ebenfalls denselben Winkel mit der Orthogonalen einschließen, beispielsweise 35°.

Diese Gestaltung ermöglicht bei einer geringen Gewindesteigung eine möglichst große Durchgangshöhe in axialer Richtung zwischen dem Stützelement und dem Unterkopfgewinde.

Insbesondere bei Distanzbefestigern, die ein Verhältnis Q1 = D_{K} / D_{A} zwischen 0,6 und 0,8 und ein Verhältnis Q2 = P_{U} / D_{A} zwischen 0,25 bis 0,35 besitzen.

Dadurch kann auch bei geringer Steigung das Unterkopfgewinde durch eine Außenschale mit üblicher Materialstärke von mehr als 0,35 mm, insbesondere von etwa 0,5 mm, einfach durchgeführt werden, da der Durchgang der Außenschale zwischen dem Unterkopfgewinde und dem Stützelement nicht behindert wird.

Der Gewindespitzenwinkel zwischen den Flanken ist bevorzugt größer als 40°. Dies gilt sowohl für das Stützelement und das Verankerungsgewinde als auch für das Unterkopfgewinde. Dies erleichtert die Herstellung des Gewindes beim Gewindewalzprozess.

Das Stützelement weist in seinem Umlauf einen Anstieg auf, der kleiner als die Steigung des Unterkopfgewindes ist. Dadurch kann, insbesondere bei einer großen Steigung des Unterkopfgewindes, die Auflagefläche für die Außenschale vergrößert werden, ohne dass der minimale axiale Abstand zwischen dem Unterkopfgewinde und dem Stützelement zu klein wird, und so bevorzugt größer als 0,35 mm zwischen den benachbarten Gewindestrukturen bleibt.

Das Verankerungsgewinde kann so eingesetzt werden, dass dieses entweder mit der Unterkonstruktion verschraubt ist oder in Auszugsrichtung einen Formschluss mit der Unterkonstruktion bildet.

Das Stützelement ist bevorzugt so ausgestaltet, dass die axiale Distanz zum Unterkopfgewinde in Richtung des Kopfes abnimmt.

Bevorzugt liegt die dem Kopf zugewandte Flanke am Beginn des Stützelements unterhalb der Stelle, also weiter beabstandet zum Kopf, an der die dem Kopf zugewandte Flanke des Unterkopfgewindes den geringsten Abstand zum Kopf besitzt.

Dies erleichtert die Führung der Außenschale entlang des Unterkopfgewindes.

Das Stützelements nähert sich mit seiner dem Kopf zugewandten Flanke in seinem weiteren Verlauf weiter dem Kopf an, bevorzugt so weit, bis sie einen Abstand zum Kopf besitzt, der kleiner oder gleich dem Abstand der Flanke des Unterkopfgewindes zum Kopf am Gewindeauslauf des Unterkopfgewindes ist.

Der Verlauf der Annäherung erfolgt vorzugsweise kontinuierlich, besonders bevorzugt mit einem Steigungswinkel, der kleiner als 45°, insbesondere kleiner als 30°, ist. Dadurch kann ein Abschaben des Stützelements, nachdem das Unterkopfgewinde durch die Außenschale geschraubt wird und das Stützelement die Außenschale passieren soll, verhindert werden.

Das Stützelement weist eine Stelle oder einen Bereich mit einer minimalen Distanz zum Kopf auf. Diese Stelle oder dieser Bereich liegt bevorzugt in der Draufsicht der Stelle oder dem Bereich des Unterkopfgewindes, der den minimalen Abstand zum Kopf besitzt, gegenüber. Der Winkelabstand beträgt in etwa 180°.

Der Winkelabstand ist bis zu etwa 180° möglichst groß gewählt, kann aber durch den Mindestabstand, den die untere Flanke vom Unterkopfgewinde einhalten muss, kleiner sein.

So kann bei einer geringen Steigung der Winkelabstand auch bei 112,5° liegen, wobei das Stützelement schon bei einem Winkelabstand von 60° beginnt.

Das Unterkopfgewinde läuft bevorzugt abrupt aus. Dadurch wird die Tragfähigkeit in Verbindung mit dem Stützelement verbessert.

Der kleinste Abstand zwischen dem Unterkopfgewinde und dem Abstützelement ist größer als die halbe Steigung, aber kleiner als die Steigung.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1a: eine Ansicht eines erfindungsgemäßen Distanzbefestigers;
- Fig. 1b: eine Ansicht des Kopfbereichs eines erfindungsgemäßen Distanzbefestigers;
- Fig. 2a: eine Detailansicht des Unterkopfbereichs des Distanzbefestigers aus Fig. 1;
- Fig. 2b: eine Querschnittsansicht der Fig.1;
- Fig. 3a: eine Querschnittsdarstellung des Unterkopfgewindes der Fig. 1;
- Fig. 3b: eine Querschnittsdarstellung des Stützelements der Fig. 1;
- Fig. 4a: eine Ansicht des Kopfbereichs einer weiteren Ausgestaltung eines erfindungsgemäßen Distanzbefestigers;
- Fig. 4b: eine Querschnittsansicht der Fig. 4a; und
- Fig. 5: eine Ansicht des Kopfbereichs einer weiteren Ausgestaltung eines erfindungsgemäßen Distanzbefestigers.

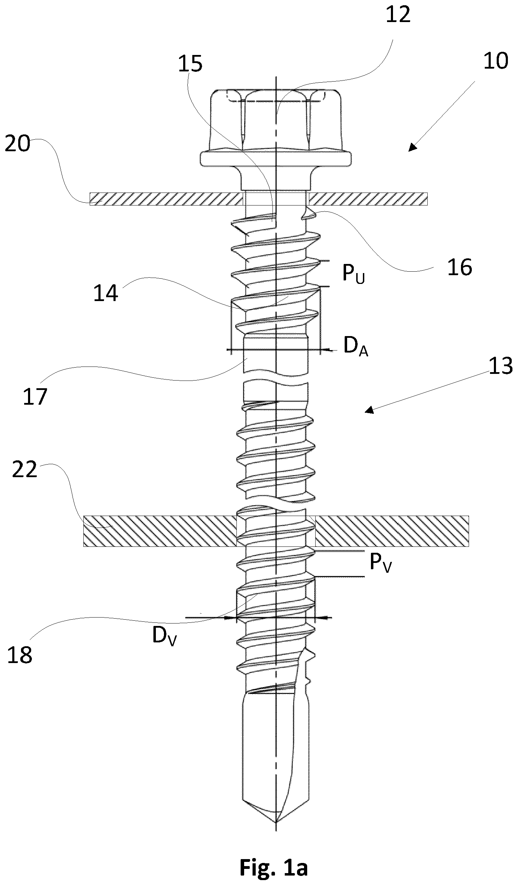

Fig. 1a zeigt eine Seitenansicht eines erfindungsgemäßen Distanzbefestigers 10, mit einem Kopf 12, und einem Schaft 13, der hier exemplarisch in einer Bohrspitze endet. Der Schaft 13 trägt ein Unterkopfgewinde 14 mit dem Außendurchmesser D_{A} und ein Verankerungsgewinde mit dem Außendurchmesser D_{V}. Der Außendurchmesser D_{A} ist in der vorliegenden Ausführungsform geringfügig größer als D_{V}. Der Unterscheid kann also bevorzugt weniger als 10% betragen. Die Außendurchmesser D_{A} und D_{V} können weiter bevorzugt aber auch gleich sein.

Auch die Steigung des Unterkopfgewindes P_{U} und des Verankerungsgewindes P_{V} sind gleich, was den Vorteil hat, dass Außenschale und Unterkonstruktion beim Verschraubungsvorgang nicht zwingend relativ zueinander bewegt werden, wenn Unterkonstruktion und Außenschale gleichzeitig mit dem Distanzbefestiger 10 in Eingriff stehen.

Zwischen dem Verankerungsgewinde 18 und dem Unterkopfgewinde 14 liegt, wie bei Distanzbefestigern üblich, ein gewindefreier Abschnitt 17.

Das Verhältnis Q1 = D_{K} / D_{A} liegt in diesem Ausführungsbeispiel bei 0,67 und Q2 = P_{U} / D_{A} bei 0,29. Wie aus Q2 erkennbar, weist das Unterkopfgewinde eine verhältnismäßig geringe Steigung P_{U} auf. Da die Steigung des Unterkopfgewindes 14 der Steigung des Verankerungsgewindes 18 entspricht, eignet sich ein solcher Distanzbefestiger 10 insbesondere für die Verwendung in einer Metallunterkonstruktion.

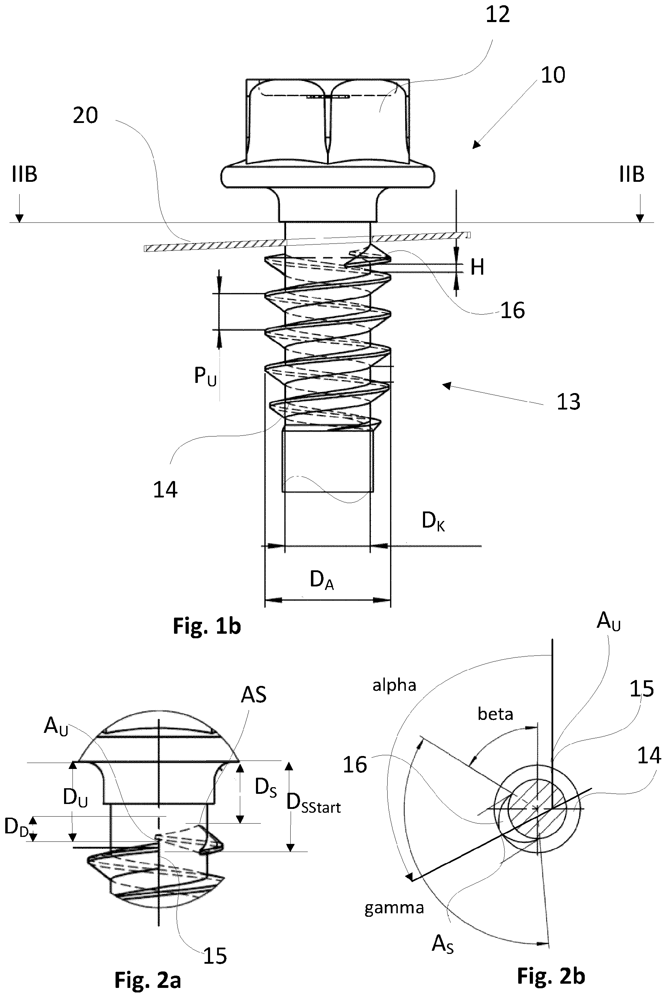

Der erfindungsgemäße Distanzbefestiger 10 weist im Bereich des dem Kopf 12 zugewandten Auslaufs des Unterkopfgewindes 14 ein erfindungsgemäßes Stützelement 16 auf. Dieses wird in der Detailansicht der Fig. 1b näher beschrieben.

Der dargestellte Distanzbefestiger 10 verbindet eine Unterkonstruktion 22 und eine Außenschale 20. Zwischen der Unterkonstruktion 22 und der Außenschale 20 kann ein Dämmmaterial eingebracht sein.

Fig. 1b zeigt den Kopfbereich eines erfindungsgemäßen Distanzbefestigers 10. Dieser weist einen mit Antriebsmerkmalen versehenen Kopf 12 auf, an den sich ein Schaft 13 anschließt. Der Schaft 13 trägt ein Unterkopfgewinde 14.

Neben dem Unterkopfgewinde ist ein Stützelement 16 am Schaft 13 angeformt. Das Stützelement 16 ist in einem Abstand zum Gewindeauslauf des Unterkopfgewindes 14 angeordnet.

Das Stützelement 16 erstreckt sich ebenfalls über einen Erstreckungswinkel von 125°, wie dies in Fig. 2b erkennbar ist, sodass die durch den Gewindeauslauf des Unterkopfgewindes und des Stützelements gebildeten Auflagerpunkte beabstandet zueinander angeordnet sind.

Fig. 2a zeigt eine Detailansicht des Unterkopfbereichs des Distanzbefestigers aus Fig. 1 in einer um eine Vierteldrehung verdrehten Lage.

Fig. 2a zeigt den Auflagepunkt A_{S} am Stützelement 16, an dem das Stützelement 16 seinen Mindestabstand D_{S} zum Kopf 12 besitzt. Das Unterkopfgewinde 14 läuft mit seinem Endpunkt 15 abrupt aus. Das Unterkopfgewinde 14 besitzt in diesem Punkt den Abstand D_{U} vom Kopf 12.

Das Stützelement 16 beginnt erfindungsgemäß mit seiner Lastflanke in Axialrichtung gesehen unterhalb des Auflagepunkts A_{U} des Unterkopfgewindes 14, was hier der Lastflanke am Gewindeauslauf des Unterkopfgewindes 14 entspricht.

Der Beginn des Stützelements liegt in einem Abstand D_{Sstart} zum Kopf. So ist der Abstand D_{U} kleiner als der Abstand D_{Sstart}.

Dadurch wird beim Eindrehen des Distanzbefestigers 10 dafür gesorgt, dass das Stützelement 16 weich unter die Außenschale 20 greifen kann, wodurch einer Zerstörung des Stützelements während des Eindrehens vorgebeugt wird.

Ferner ist das Toleranzmaß D_{D} dargestellt, das höchstens 15%, bevorzugt höchstens 10%, des Außendurchmessers D_{A} des Unterkopfgewindes beträgt. Der Auflagepunkt A_{S} liegt bevorzugt im gleichen Abstand zum Kopf wie der Auflagepunkt A_{U} des Unterkopfgewindes, kann aber im Rahmen des Toleranzmaßes D_{D} auch in Richtung des Kopfes beabstandet zum Auflagepunkt A_{U} des Unterkopfgewindes 14 liegen. Bezogen auf den Abstand zum Kopf ist der Abstand des Auflagepunkts A_{S} größer oder gleich der Differenz zwischen dem Abstand des Auflagepunkts A_{U} und dem Toleranzabstand D_{D}.

Dadurch wird die Verkippung der Außenschale in engen Grenzen gehalten.

Die Fig. 2b zeigt eine Querschnittsansicht der Fig.1, die gedreht ist. Das Unterkopfgewinde endet abrupt in seinem Endpunkt 15, der gleichzeitig auch den Auflagepunkt A_{U} des Unterkopfgewindes 14 bildet.

Der Beginn des Stützelements 14 ist ausgehend vom Endpunkt 15 entgegen dem Uhrzeigersinn in einem Winkelabstand beta beabstandet. Im vorliegenden Fall beträgt beta 60°, da ein größerer Abstand bei dem Unterkopfgewinde nicht möglich ist, bei dem der Mindestabstand H zwischen dem Stützelement 16 und dem Unterkopfgewinde 14 noch eingehalten werden kann. Das Stützelement 16 erstreckt sich über einen Erstreckungswinkel gamma. Dieser beträgt hier 125°. Über diese Länge kann das Stützelement 16 gut durch Walzen hergestellt werden.

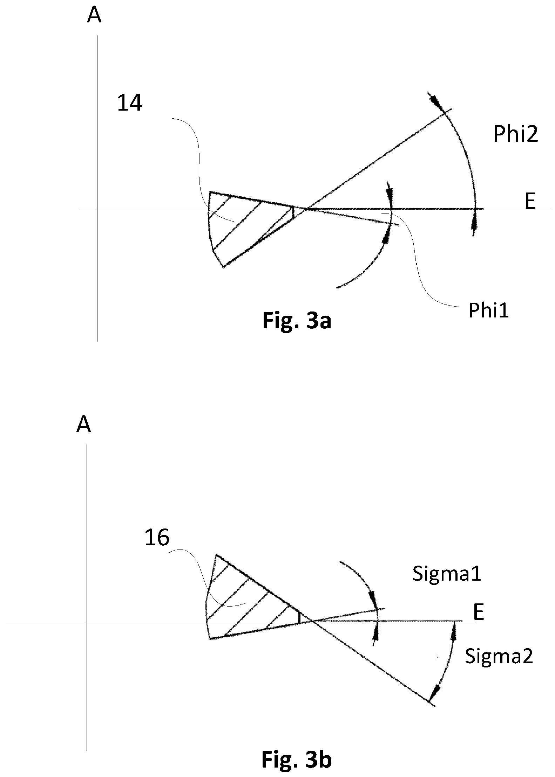

Der Winkelabstand alpha ist der Winkelabstand zwischen dem Auflagepunkt A_{U} des Unterkopfgewindes 14 und dem Auflagepunkt A_{S} des Stützelements 16. Der Winkelabstand alpha beträgt hier zwar lediglich etwa 122° anstelle der gewünschten 180°, jedoch kann auch dieser für die vorliegende Gewindesteigung nur erreicht werden, weil die Querschnittsformen des Stützelements 16 und des Unterkopfgewindes 14 aufeinander abgestimmt sind. Dies ist in den Figuren 3a und 3b näher beschrieben.

Das Unterkopfgewinde weist eine Querschnittsform auf, wie sie in Fig. 3a dargestellt ist, und das Stützelement weist eine Querschnittsform auf, wie sie in Fig. 3b dargestellt ist.

Die beiden Querschnittsformen sind in ihren Flankenwinkeln identisch, aber gespiegelt an der Orthogonalen, ausgebildet.

So zeigt Fig. 3a ausschnittsweise den Querschnitt des Unterkopfgewindes 14, das einen Lastflankenwinkel phi_1 mit der Ebene E, die orthogonal zur Schraubenmittelachse A liegt, bildet. Die der Lastflanke gegenüberliegende Flanke schließt mit der Ebene E einen Flankenwinkel von phi_2 ein. Bevorzugt ist für das Unterkopfgewinde phi_1 kleiner als phi_2 gewählt. So liegt im Falle des erfindungsgemäßen Distanzbefestigers phi_1 bei 10° und phi_2 bei 35°.

Fig. 3b zeigt ausschnittsweise die Querschnittsform des Stützelements 16, das entsprechend einen Lastflankenwinkel von sigma_1 und einen der Lastflanke gegenüberliegenden Flankenwinkel von sigma_2 aufweist.

Auf diese Weise sind die am Stützelement 16 und am Unterkopfgewinde 14 gegenüberliegenden Flanken in einem kleinen Flankenwinkel phi_1 und sigma_2 ausgebildet, sodass eine verbesserte Durchgangshöhe H am Kerndurchmesser zwischen dem Unterkopfgewinde und dem Stützelement 16 vorliegt.

Die Lage der Gewindespitze des Unterkopfgewindeauslaufs und des radial äußersten Punktes des Stützelements 16 befindet sich bevorzugt in etwa in derselben orthogonal zur Schraubenmittelachse liegenden Ebene.

In dieser Ausgestaltung mit derselben Gewindesteigung und entsprechend dünner Blechstärke würde ein doppelgängiges Gewinde dazu führen, dass der Abstand zwischen den beiden Gewindegängen zu gering wäre, als dass das Stützelement die Außenschale ohne eine Einformung eines Gewindes in die Außenschale durchlaufen könnte.

Durch das erfindungsgemäße Stützelement wird jedoch ein Auflager mit der notwendigen Durchgangshöhe bereitgestellt, ohne dass sich das Stützelement und das Unterkopfgewinde in ihrem Verlauf zu nahe kommen und damit die Durchführung durch die Außenschale behindern könnten.

Der Abstand zwischen dem dem Kopf nächstgelegenen Punkt der Lastflanke des Unterkopfgewindes und dem des Stützelements kann aufgrund der Wahl der Querschnittsform des Stützelements gering gehalten werden, sodass auch bei hohem Winddruck die Verkippneigung deutlich reduziert ist.

Durch den umfänglichen Abstand zwischen dem Unterkopfgewinde und dem Stützelement kann ein einfacherer Geometriewechsel und Versatz zwischen dem Unterkopfgewinde und dem Stützelement vorgenommen werden, als dies bei einem durchgehenden Gewinde der Fall wäre.

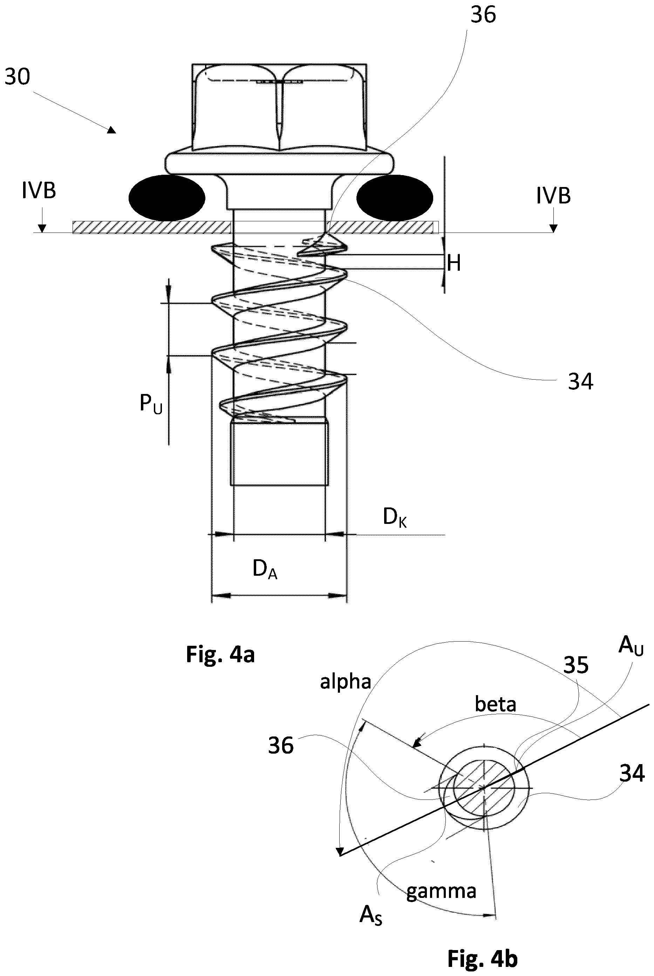

Fig. 4a zeigt eine weitere erfindungsgemäße Ausgestaltung eines Distanzbefestigers 30, in einer ähnlichen Ausgestaltung wie Fig. 1, wobei das Stützelement 36 und das Unterkopfgewinde 34 ebenfalls asymmetrisch und gespiegelt ausgebildet sind. In der in Fig. 3 dargestellten Ausführung ist das Verhältnis Q2 bei etwa 0,4, wobei Q1 dem der Fig. 1 entspricht. Ein solches Verhältnis eignet sich besonders für eine Verschraubung in einer Holzunterkonstruktion.

Fig. 4b zeigt die Schnittansicht IVB-IVB, in der gut erkennbar ist, dass die Erstreckung des Stützelements 16 über denselben Erstreckungswinkel gamma erfolgt, sich aber die Lage von der Ausführung gemäß Fig. 1 unterscheidet. Da im Falle des Distanzbefestigers 30 die Steigung des Unterkopfgewindes P_{U} größer ist als bei der Ausführung gemäß Fig.1, kann das Stützelement 36 weiter von dem Auflagepunkt A_{U} des Unterkopfgewindes beabstandet werden und dennoch eine ausreichende Durchgangshöhe H bereitgestellt werden.

Der Winkelabstand zwischen dem Auflagepunkt A_{U} des Unterkopfgewindes und dem Auflagepunkt des Stützgewindes A_{S} beträgt hier 180°. Da das Unterkopfgewinde 34 im Auflagepunkt abrupt endet, beträgt der Winkelabstand beta zwischen dem Ende des Unterkopfgewindes und dem Beginn des Stützelements 117,5°.

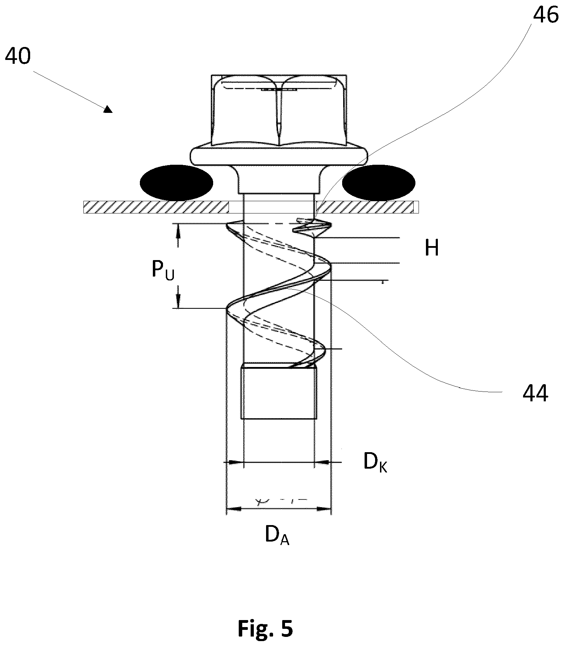

Fig. 5 zeigt eine weitere Ausgestaltung eines erfindungsgemäßen Distanzbefestigers 40, wobei dieser ein Verhältnis von Q2 von etwa 0,65 aufweist. Eine solche Gestaltung des Unterkopfgewindes 44 korrespondiert mit einem Verankerungsgewinde, das bevorzugt für die Befestigung in einem Betonteil geeignet ist.

In diesem Ausführungsbeispiel ist die Querschnittsform für das Stützelement 46 und das Unterkopfgewinde 44 dieselbe, insbesondere wie dies in Fig. 3a dargestellt ist. Aufgrund der recht großen Steigung im Hinblick auf die üblichen Blechdicken von Außenschalen kann der geringe Flankenwinkel der Lastflanke auch im Stützelement 46 beibehalten werden, wobei dennoch eine ausreichende Durchgangshöhe H zwischen dem Unterkopfgewinde 44 und dem Stützelement 46 gewährleistet wird.

Durch das dennoch kurze und beabstandete Stützelement kann bei gleichem Kerndurchmesser und einem durchgehend gleichen Rohlingdurchmesser auf einfache Weise ein Distanzbefestiger 40 mit verbesserter Abdichtwirkung hergestellt werden. Alternativ ist für den Fall, dass das Unterkopfgewinde 44 einen größeren Außendurchmesser als das Verankerungsgewinde aufweisen soll, ein nur geringfügiges Aufstauchen des Unterkopfbereichs vor dem Walzen notwendig.

In der Ausführung gemäß Fig. 5 haben der Auflagepunkt A_{S} des Stützgewindes und der Auflagepunkt A_{U} des Unterkopfgewindes den gleichen Abstand zum Kopf.

Die Winkelabstände und der Erstreckungswinkel entsprechen denen der Fig. 4b.

## Patentansprüche

1. Distanzbefestiger (10, 30, 40) zur Befestigung einer Außenschale (20) an einer Unterkonstruktion, wobei der Distanzbefestiger (10, 30, 40) einen Kopf (12) und einen daran anschließenden Schaft aufweist, der in einer Spitze endet, wobei der Schaft ein Verankerungsgewinde zur zugfesten Verankerung in der Unterkonstruktion trägt, und der Schaft ein dem Kopf nächstgelegenes Unterkopfgewinde (14) aufweist, wobei zwischen dem Unterkopfgewinde (14, 34, 44) und dem Verankerungsgewinde (18) ein gewindefreier Schaftabschnitt (17) liegt, wobei das Unterkopfgewinde (14, 34, 44) nahe dem Kopf (12) ausläuft und eine Unterkopfgewindesteigung (P_{U}) besitzt, **dadurch gekennzeichnet, dass** zusätzlich zu dem Unterkopfgewinde (14, 34, 44), in Umfangsrichtung beabstandet zum Gewindeauslauf des Unterkopfgewindes (14, 34, 44), das einen Auflagepunkt (A_{U}) bildet, ein Stützelement (16) ausgeformt ist, wobei das Stützelement in dem Bereich in dem das Stützelement in Draufsicht mit dem Unterkopfgewinde überlappt, zu dem Unterkopfgewinde beabstandet ist, wobei das Stützelement (16) einen Auflagepunkt (A_{S}) für eine zwischen dem Kopf (12) und dem Unterkopfgewinde (14, 34, 44) liegende Außenschale (20) bildet, wobei der Abstand des Auflagepunkts (A_{S}) des Stützelements (16, 36, 46) zum Kopf größer oder gleich der Differenz zwischen dem Abstand des Auflagepunkts (A_{U}) des Unterkopfgewindes (14, 34, 44) zum Kopf und einem Toleranzabstand D_{D} ist, der höchstens 15% des Außendurchmessers (D_{A}) des Unterkopfgewindes (14, 34, 44) beträgt, wobei sich die Länge des Stützelements über einen Erstreckungswinkel (gamma) erstreckt, der kleiner als 150° ist.

2. Distanzbefestiger nach Anspruch 1, **dadurch gekennzeichnet, dass** das Stützelement (16, 36, 46) an seinem Beginn einen größeren Abstand zum Kopf aufweist als der Auflagepunkt (A_{U}) des Unterkopfgewindes (14, 34, 44).

3. Distanzbefestiger nach Anspruch 1 oder 2, **dadurch gekennzeichnet, dass** das Unterkopfgewinde (14, 34, 44) eingängig ist.

4. Distanzbefestiger nach einem der Ansprüche 1 bis 3, **dadurch gekennzeichnet, dass** die Steigung (P_{U}) des Unterkopfgewindes (14, 34, 44) größer ist als der Anstieg im Stützelement (16, 36, 46).

5. Distanzbefestiger nach einem der vorangehenden Ansprüche, **dadurch gekennzeichnet, dass** das Unterkopfgewinde (14, 34, 44) abrupt endet.

6. Distanzbefestiger nach einem der vorangehenden Ansprüche, **dadurch gekennzeichnet, dass** der Winkelabstand (alpha) zwischen dem Auflagepunkt (A_{S}) des Stützelements (16, 36, 46) und dem Auflagepunkt (A_{U}) des Unterkopfgewindes (14, 34, 44) zwischen 110° und 190° beträgt.

7. Distanzbefestiger nach einem der vorangehenden Ansprüche, **dadurch gekennzeichnet, dass** der Winkelabstand (beta) zwischen dem Ende des Unterkopfgewindes (14, 34, 44) und dem Beginn des Stützelements (16, 36, 46) zwischen 50° und 150° beträgt.

8. Distanzbefestiger nach einem der vorangehenden Ansprüche, **dadurch gekennzeichnet, dass** der Mindestabstand des Stützelements (16, 36, 46) zum Unterkopfgewinde in dem Bereich, in dem das Stützelement in Draufsicht mit dem Unterkopfgewinde überlappt, eine Durchgangshöhe (H) definiert, die größer als 0,4mm ist.

9. Distanzbefestiger nach einem der vorangehenden Ansprüche, **dadurch gekennzeichnet, dass** das Stützelement (16) zwei Flanken aufweist.

10. Distanzbefestiger nach Anspruch 9, **dadurch gekennzeichnet, dass** der Spitzenwinkel des Stützelements (16, 36, 46) dem des Unterkopfgewindes (14) entspricht.

11. Distanzbefestiger nach Anspruch 9 oder 10, **dadurch gekennzeichnet, dass** die der Schraubenspitze zugewandte Flanke des Stützelements (16, 36) mit der Ebene (E), die orthogonal zur Schraubenachse (A) liegt, einen Winkel (sigma_2) einschließt, der kleiner ist als der Winkel (phi_2) der der Schraubenspitze zugewandten Flanke des Unterkopfgewindes.

12. Distanzbefestiger nach einem der vorangehenden Ansprüche, **dadurch gekennzeichnet, dass** die der Schraubenspitze zugewandte Flanke des Unterkopfgewindes (16, 36) mit der Ebene (E), die orthogonal zur Schraubenachse (A) liegt, einen Winkel (phi_2) einschließt, der größer ist als der Winkel (phi_1) der der Schraubenspitze zugewandten Flanke des Unterkopfgewindes.

13. Distanzbefestiger nach einem der vorangehenden Ansprüche 9 bis 12, **dadurch gekennzeichnet, dass** das Stützelement (16, 36) einen Querschnitt aufweist, der dem Querschnitt des Unterkopfgewindes (14, 34) gespiegelt an der Ebene (E), die orthogonal zur Schraubenachse liegt, entspricht.

14. Distanzbefestiger nach einem der vorangehenden Ansprüche, **dadurch gekennzeichnet, dass** das Verankerungsgewinde die gleiche Steigung besitzt wie das Unterkopfgewinde (14, 34, 44).

15. Anordnung umfassend eine Unterkonstruktion, einen in der Unterkonstruktion verankerten Distanzbefestiger nach einem der vorangehenden Ansprüche, wobei eine Außenschale zwischen dem Kopf und dem Unterkopfgewinde gehalten ist, wobei die Stärke der Außenschale geringer ist als der minimale axiale Abstand zwischen dem Stützelement und dem Unterkopfgewinde.

## Claims

1. Spacing fastener (10, 30, 40) for fastening an outer shell (20) to a substructure, which spacing fastener (10, 30, 40) has a head (12) and an adjoining shank that ends in a tip, which shank has an anchoring thread for anchoring it in the substructure in a pull-out resistant manner, and which shank has an under head thread (14) closest to the head, with a non-threaded shank portion (17) being located between the under head thread (14, 34, 44) and the anchoring thread (18), which under head thread (14, 34, 44) ends close to the head (12) and has an under head thread pitch (P_{U}), **characterized in that,** in addition to the under head thread (14, 34, 44), a support element (16) is formed which is spaced at a distance, in the circumferential direction, from the screw thread end of the under head thread (14, 34, 44), which under head thread (14, 34, 44) forms a contact point (A_{U}), which support element is spaced apart from the under head thread in the region in which the support element overlaps with the under head thread as viewed from above, which support element (16) forms a contact point (A_{S}) for an outer shell (20) located between the head (12) and the under head thread (14, 34, 44), wherein the distance of the contact point (A_{S}) of the support element (16, 36, 46) from the head is greater than or equal to the difference between the distance of the contact point (A_{U}) of the under head thread (14, 34, 44) from the head and a tolerance distance D_{D}, which is at most 15% of the outer diameter (D_{A}) of the under head thread (14, 34, 44), with the length of the support element extending over an angular extent (gamma) that is less than 150°.

2. Spacing fastener according to claim 1, **characterized in that,** at its start, the support element (16, 36, 46) is at a greater distance from the head than the contact point (A_{U}) of the under head thread (14, 34, 44).

3. Spacing fastener according to any one of claims 1 or 2 above, **characterized in that** the under head thread (14, 34, 44) is a single-start thread.

4. Spacing fastener according to any one of claims 1 to 3 above, **characterized in that** the pitch (P_{U}) of the under head thread (14, 34, 44) is greater than the rise in the support element (16, 36, 46).

5. Spacing fastener according to any one of the preceding claims, **characterized in that** the under head thread (14, 34, 44) ends abruptly.

6. Spacing fastener according to any one of the preceding claims, **characterized in that** the angular distance (alpha) between the contact point (A_{S}) of the support element (16, 36, 46) and the contact point (A_{U}) of the under head thread (14, 34, 44) is between 110° and 190°.

7. Spacing fastener according to any one of the preceding claims, **characterized in that** the angular distance (beta) between the end of the under head thread (14, 34, 44) and the start of the support element (16, 36, 46) is between 50° and 150°.

8. Spacing fastener according to any one of the preceding claims, **characterized in that** the minimum distance of the support element (16, 36, 46) from the under head thread in the region in which the support element overlaps with the under head thread as viewed from above defines a passage height (H) which is greater than 0.4 mm.

9. Spacing fastener according to any one of the preceding claims, **characterized in that** said support element (34) has two flanks.

10. Spacing fastener according to claim 9, **characterized in that** the tip angle of the support element (16, 36, 46) corresponds to that of the under head thread (14).

11. Spacing fastener according to any one of claims 9 or 10 above, **characterized in that** the flank of the support element (16, 36) facing the screw tip forms an angle (sigma_2) with the plane (E) that is orthogonal to the screw axis (A), which angle is smaller than the angle (phi_2) of the flank of the under head thread facing the screw tip.

12. Spacing fastener according to any one of the preceding claims, **characterized in that** the flank of the under head thread (16, 36) facing the screw tip forms an angle (phi_2) with the plane (E) that is orthogonal to the screw axis (A), which angle is greater than the angle (phi_1) of the flank of the under head thread facing the screw tip.

13. Spacing fastener according to any one of claims 9 to 12 above, **characterized in that** the cross-section of the support element (16, 36) corresponds to the cross-section of the under head thread (14, 34) mirrored about the plane (E) that is orthogonal to the screw axis.

14. Spacing fastener according to any one of the preceding claims, **characterized in that** the anchoring thread has the same pitch as the under head thread (14, 34, 44).

15. Assembly comprising a substructure, a spacing fastener of the type specified in any one of the preceding claims which is anchored in the substructure, wherein an outer shell is held in place between the head and the under head thread, with the thickness of the outer shell being less than the minimum axial distance between the support element and the under head thread.

## Revendications

1. Elément de fixation d'espacement (10, 30, 40) pour la fixation d'une coque extérieure (20) à une sous-structure, dans lequel l'élément de fixation d'espacement (10, 30, 40) présente une tête (12) et une tige se raccordant à celle-ci, qui se termine en une pointe, dans lequel la tige porte un filetage d'ancrage pour l'ancrage résistant à la traction dans la sous-structure, et la tige présente un filetage sous la tête (14) le plus proche de la tête, dans lequel une section de tige (17) exempte de filetage se situe entre le filetage sous la tête (14, 34, 44) et le filetage d'ancrage (18), dans lequel le filetage sous la tête (14, 34, 44) s'arrête à proximité de la tête (12) et possède un pas de filetage sous la tête (P_{U}), **caractérisé en ce qu'**en plus du filetage sous la tête (14, 34, 44), un élément de support (16) est conformé dans la direction périphérique à distance de la fin de filetage du filetage sous la tête (14, 34, 44), qui forme un point d'appui (A_{U}), dans lequel l'élément de support, dans la zone dans laquelle l'élément de support dans la vue de dessus chevauche le filetage sous la tête, est espacé du filetage sous la tête, dans lequel l'élément de support (16) forme un point d'appui (A_{S}) pour une coque extérieure (20) située entre la tête (12) et le filetage sous la tête (14, 34, 44), dans lequel la distance du point d'appui (A_{S}) de l'élément de support (16, 36, 46) par rapport à la tête est supérieure ou égale à la différence entre la distance du point d'appui (A_{U}) du filetage sous la tête (14, 34, 44) par rapport à la tête et une distance de tolérance D_{D}, qui est égale au plus à 15 % du diamètre extérieur (D_{A}) du filetage sous la tête (14, 34, 44), dans lequel la longueur de l'élément de support s'étend sur un angle d'étendue (gamma) qui est inférieur à 150°.

2. Elément de fixation d'espacement selon la revendication 1, **caractérisé en ce que** l'élément de support (16, 36, 46) présente à son début une distance par rapport à la tête plus grande que le point d'appui (A_{U}) du filetage sous la tête (14, 34, 44).

3. Elément de fixation d'espacement selon la revendication 1 ou 2, **caractérisé en ce que** le filetage sous la tête (14, 34, 44) est monofilet.

4. Elément de fixation d'espacement selon l'une quelconque des revendications 1 à 3, **caractérisé en ce que** le pas (P_{U}) du filetage sous la tête (14, 34, 44) est plus grand que la montée dans l'élément de support (16, 36, 46).

5. Elément de fixation d'espacement selon l'une quelconque des revendications précédentes, **caractérisé en ce que** le filetage sous la tête (14, 34, 44) se termine brusquement.

6. Elément de fixation d'espacement selon l'une quelconque des revendications précédentes, **caractérisé en ce que** la distance angulaire (alpha) entre le point d'appui (A_{S}) de l'élément de support (16, 36, 46) et le point d'appui (A_{U}) du filetage sous la tête (14, 34, 44) est comprise entre 110° et 190°.

7. Elément de fixation d'espacement selon l'une quelconque des revendications précédentes, **caractérisé en ce que** la distance angulaire (beta) entre l'extrémité du filetage sous la tête (14, 34, 44) et le début de l'élément de support (16, 36, 46) est comprise entre 50° et 150°.

8. Elément de fixation d'espacement selon l'une quelconque des revendications précédentes, **caractérisé en ce que** la distance minimale de l'élément de support (16, 36, 46) par rapport au filetage sous la tête, dans la zone dans laquelle l'élément de support dans la vue de dessus chevauche le filetage sous la tête, définit une hauteur de passage (H) qui est supérieure à 0,4 mm.

9. Elément de fixation d'espacement selon l'une quelconque des revendications précédentes, **caractérisé en ce que** l'élément de support (16) présente deux flancs.

10. Elément de fixation d'espacement selon la revendication 9, **caractérisé en ce que** l'angle de pointe de l'élément de support (16, 36, 46) correspond à celui du filetage sous la tête (14).

11. Elément de fixation d'espacement selon la revendication 9 ou 10, **caractérisé en ce que** le flanc de l'élément de support (16, 36) tourné vers la pointe de vis forme avec le plan (E), qui se situe perpendiculairement à l'axe de vis (A), un angle (sigma_2) qui est inférieur à l'angle (phi_2) du flanc du filetage sous la tête tourné vers la pointe de vis.

12. Elément de fixation d'espacement selon l'une quelconque des revendications précédentes, **caractérisé en ce que** le flanc du filetage sous la tête (16, 36) tourné vers la pointe de vis forme avec le plan (E), qui se situe perpendiculairement à l'axe de vis (A), un angle (phi_2) qui est supérieur à l'angle (phi_ 1) du flanc du filetage sous la tête tourné vers la pointe de vis.

13. Elément de fixation d'espacement selon l'une quelconque des revendications précédentes 9 à 12, **caractérisé en ce que** l'élément de support (16, 36) présente une section transversale, qui correspond à la section transversale du filetage sous la tête (14, 34) de manière réfléchie sur le plan (E), qui se situe perpendiculairement à l'axe de vis.

14. Elément de fixation d'espacement selon l'une quelconque des revendications précédentes, **caractérisé en ce que** le filetage d'ancrage possède le même pas que le filetage sous la tête (14, 34, 44).

15. Ensemble comprenant une sous-structure, un élément de fixation d'espacement selon l'une quelconque des revendications précédentes ancré dans la sous-structure, dans lequel une coque extérieure est maintenue entre la tête et le filetage sous la tête, dans lequel l'épaisseur de la coque extérieure est inférieure à la distance axiale minimale entre l'élément de support et le filetage sous la tête.
